# EUROPEAN PATENT APPLICATION

(11) **EP 4 626 127 A1**
(43) Date of publication of application: **01.10.2025**
(21) Application number: 23899858.7
(22) Date of filing: 29.11.2023
(51) Int. Cl.: H04W 76/10

(54) **METHOD FOR PROCESSING BINDING INFORMATION, AND NETWORK DEVICE AND STORAGE MEDIUM**

(30) Priority: 09.12.2022 CN 202211580050
(71) Applicant: ZTE CORPORATION, Shenzhen, Guangdong 518057 (CN)
(72) Inventor: WU, Zhonghua, Shenzhen, Guangdong 518057 (CN); LIU, Junyi, Shenzhen, Guangdong 518057 (CN); WANG, Bin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/135165
(87) International publication number: WO 2024/120279

(57) **Abstract**

The embodiments of the present application relate to the technical field of information processing. Provided are a method for processing binding information, and a network device and a storage medium. The method for processing binding information comprises: when a BSF network element receives a binding information registration request, acquiring user session identification information corresponding to binding information to be registered; determining the use state of each piece of registered binding information in the BSF network element according to the user session identification information; and determining target binding information from among the registered binding information according to the use state, and performing de-registration processing on the target binding information.

## Description

### CROSS REFERENCE TO RELATED APPLICATIONS

This application is based upon and claims priority to Chinese Patent Application No. 202211580050.2 filed on December 09, 2022, entitled "METHOD FOR PROCESSING BINDING INFORMATION, AND NETWORK DEVICE AND STORAGE MEDIUM", the entire contents of which are incorporated herein by reference.

### TECHNICAL FIELD

The present application relates to the technical field of information processing, and in particular to a method for processing binding information, and a network device and a storage medium.

### BACKGROUD

In the 5th generation core (5GC) network defined by the 3rd Generation Partnership Project (3GPP), in order to establish data connection, user equipment (UE) needs to request a session management function (SMF) network element to establish a packet data unit (PDU) session, and then the UE can access an application function (AF) by means of the default QoS flow of the PDU session. In order to ensure the quality of service of specific media stream transmission, the AF may send such media stream information and corresponding QoS requirements to a policy control function (PCF) network element, so as to trigger the PCF network element to generate a corresponding policy and charging control (PCC) rule and issue the same to the SMF network element, which further triggers the SMF network element to establish a dedicated QoS flow to the UE, thereby ensuring the quality of service of relevant media stream transmission.

During establishment of the PDU session, the PCF network element needs to register binding information in a binding support function (BSF) network element, and de-register corresponding binding information after receiving an instruction to delete the PDU session. However, there are some abnormal scenarios, such as failure of a PCF network element or abnormality in a link between the PCF network element and the BSF network element, which causes the BSF network element to fail to receive the request to de-register binding information from the PCF network element, and ultimately causes relevant binding information to remain in the BSF network element. The residual binding information occupies memory resource of the BSF network element, and even causes the memory of the BSF network element to be overloaded and unable to process subsequent services normally.

### SUMMARY

Embodiments of the present application mainly aim to provide a method for processing binding information, and a network device and a storage medium, which is intended to clear invalid binding information from a BSF network element timely, reduce the risk of overload of BSF, and improve the user experience.

In a first aspect, an embodiment of the present application provides a method for processing binding information, the method includes: acquiring, in a case where a binding support function called BSF network element receives a binding information registration request, user session identification information corresponding to binding information to be registered; determining, according to the user session identification information, a use state of each piece of registered binding information in the BSF network element; and determining, according to the use state, target binding information from among the registered binding information, and deregistering the target binding information.

In a second aspect, an embodiment of the present application further provides a network device, the network device includes a processor, a memory, a computer program stored in the memory and executable by the processor, and a data bus for implementing connection and communication between the processor and the memory, wherein the computer program, when executed by the processor, implements the steps of the method for processing binding information according to any one of aspects of the description of the present application.

In a third aspect, an embodiment of the present application further provides a computer-readable storage medium for, wherein the storage medium stores one or more programs thereon, and the one or more programs can be executed by one or more processors, so as to implement the steps of the method for processing binding information according to any one of aspects of the description of the present application.

### BRIEF DESCRIPTION OF THE DRAWINGS

In order to more clearly illustrate the technical solutions in the embodiments of the present application, the drawings required for use in the description of the embodiments will be briefly introduced below, obviously, the drawings described below are some embodiments of the present application, and other drawings can be obtained by those skilled in the art based on these drawings without paying creative labor.
FIG. 1 is a flow chart of a method for processing binding information provided in embodiments of the present application.
FIG. 2 is an application scenario diagram of a method for processing binding information provided in embodiments of the present application.
FIG. 3 is a flow chart of another method for processing binding information provided in embodiments of the present application.
FIG. 4 is a flow chart of another method for processing binding information provided in embodiments of the present application.
FIG. 5 is a schematic structural block diagram of a network device provided in embodiments of the present application.

### DETAILED DESCRIPTION

Technical solutions in embodiments of the application will be described clearly and thoroughly below with reference to the accompanying drawings in embodiments of the application. Obviously, the embodiments described are part of the embodiments of the application rather than all of the embodiments. All other embodiments obtained by those skilled in the art without creative work based on embodiments in the present application shall fall within the scope of the present application.

The flowcharts shown in the accompanying drawings are only examples and do not necessarily include all the contents and operations/steps, nor do they have to be performed in the order described. For example, some operations/steps may also be decomposed, combined or partially merged, thus the order actually performed may change according to actual conditions.

It should be understood that the terms used in the description of the present application are only for the purpose of describing specific embodiments and are not intended to limit the present application. As used in the description of the present application and the appended claims, unless the context clearly indicates otherwise, the singular forms "a", "an" and "the" are intended to include plural forms.

In some cases, in order to establish a data connection, user equipment (UE) needs to request a session management function network element to establish a PDU session, then the UE can access an application function (AF) by means of the default QoS flow of the PDU session. In order to ensure the quality of service of specific media stream transmission, the AF may send such media stream information and corresponding QoS requirements to a PCF network element, so as to trigger the PCF network element to generate a corresponding policy and charging control rule and send the same to the SMF network element, which further triggers the SMF network element to establish a dedicated QoS flow to the UE, thereby ensuring the quality of service of relevant media stream transmission. In order to ensure the quality of service of specific media stream transmission, the AF network element can send such media stream information and corresponding QoS requirements to a PCF network element, so as to trigger the PCF network element to generate corresponding policy and charging control (PCC) rules and issue them to the SMF network element, which further triggers the SMF network element to establish a dedicated QoS flow (dedicated QoS flow) to the UE, thereby ensuring the quality of service of relevant media stream transmission.

During establishment of the PDU session, the PCF network element needs to register binding information in a binding support function (BSF) network element, and de-register corresponding binding information after receiving an instruction to delete the PDU session. However, there are some abnormal scenarios, such as failure of a PCF network element or abnormality in a link between the PCF network element and the BSF network element, which causes the BSF network element to fail to receive the request to de-register binding information from the PCF network element, and ultimately causes relevant binding information to remain in the BSF network element. The residual binding information occupies memory resource of the BSF network element, and even causes the memory of the BSF network element to be overloaded and unable to process subsequent services normally.

The embodiments of the present application provide a method for processing binding information, and a network device and a storage medium. The method may be applied to a network device, wherein the network device may be a server, a base station, etc., but is not limited thereto. By means of the method, invalid binding information can be cleared from a BSF network element timely, the risk of overload of the BSF is reduced, and residual binding information is avoided from occupying memory resource of the BSF network element, and the memory of the BSF network element is prevented from being overloaded and unable to process subsequent services normally.

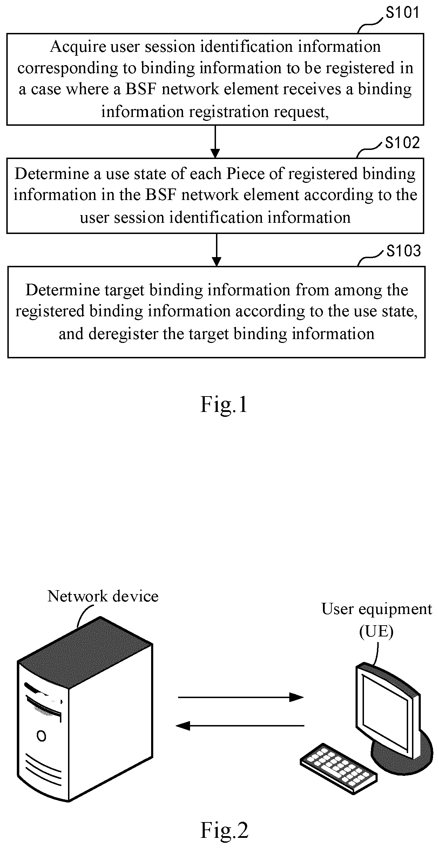

Referring to FIG. 1, FIG. 1 is a flow chart of a method for processing binding information provided in embodiments of the present application. The method for processing binding information can be used to clear invalid binding information from a BSF network element timely, reduce the risk of overload of the BSF, and improve the user experience.

As shown in FIG. 1, the method for processing binding information may include steps S101 to S103.

At S101: in a case where a BSF network element receives a binding information registration request, user session identification information corresponding to binding information to be registered is acquired.

During establishment of a PDU session, when a PCF network element needs to register binding information to be registered in the BSF network element, the PCF network element sends a binding information registration request to the BSF network element, so as to register the binding information to be registered in the BSF network element. In some cases, the binding information to be registered is the binding relationship between a UE IP allocated by the PDU session and a PCF instance. The user session identification information is used to identify a PDU session of a user terminal.

The user session identification information may include user permanent identification information and PDU session identification information, the user permanent identification information may be subscription permanent identification (SUPI) and PDU session identification (pduSessionId). the SUPI is usually an International Mobile Subscriber Identity (IMSI). In the case of a non-5G UE, the pduSessionId cannot be provided, but the pduSessionId may be generated by an SMF network element. The SUPI and pduSessionId may be used to identify one PDU session uniquely.

In some embodiments, after the user session identification information corresponding to binding information to be registered is acquired in the case where the BSF network element receives the binding information registration request, SMF network element identification information corresponding to the binding information to be registered is acquired. When the BSF network element registers the binding information to be registered, both the user session identification information and SMF network element identification information corresponding to the binding information to be registered are stored in the BSF network element.

The SMF network element identification information is used to identify an SMF network element corresponding to the PDU session, so as to determine whether the PDU session has been released.

In some cases, in the case where the PCF network element receives a policy association establishment or update request sent by the SMF network element, finds that the request carries a UE IP, and determines it necessary to register the binding information to be registered (i.e., the binding relationship between the UE IP and the PCF instance), which is associated with a policy, to the BSF network element, the binding information registration request (i.e., Nbsf_Management_Register request) is sent to the BSF network element, the request carries the binding information to be registered, and the binding information to be registered includes parameters such as user session identification information (SUPI and pduSessionId), a UE IP, a fully qualified domain name (FQDN) of PCF, an IP address port of the PCF network element, SMF network element identification information, so that the binding information to be registered is registered in the BSF network element.

At S102: a use state of each piece of registered binding information in the BSF network element is determined according to the user session identification information.

The registered binding information is information that has been registered in the BSF network element. The use state is used to indicate whether the registered binding information should be deregistered, and the use state may include a valid state and an invalid state, where the valid state is used to indicate that the registered binding information should not be deregistered, and the invalid state is used to indicate that the registered binding information should be deregistered.

In some embodiments, user session identification information corresponding to each piece of registered binding information in the BSF network is acquired; whether the user session identification information of the binding information to be registered is the same as the user session identification information corresponding to each piece of the registered binding information is determined; and if the user session identification information of the binding information to be registered is the same as the user session identification information corresponding to a piece of the registered binding information, the use state of the piece of registered binding information is determined to be an invalid state. Thus, the user session identification information of the binding information to be registered may be compared with the user session identification information corresponding to the registered binding information, so as to determine the use state of the registered binding information accurately.

In some cases, whether the user session identification information of the binding information to be registered is the same as the user session identification information corresponding to each piece of the registered binding information is determined; if the user session identification information of the binding information to be registered is the same as the user session identification information corresponding to a piece of the registered binding information, the use state of the piece of registered binding information is determined to be an invalid state; and if the user session identification information of the binding information to be registered is different from the user session identification information corresponding to each piece of the registered binding information, the use state of each piece of the registered binding information is determined to be a valid state.

For example, if the registered binding information in the BSF network element includes binding information A, binding information B and binding information C, and user session identification information corresponding to the binding information A, binding information B and binding information C respectively is acquired, if the user session identification information of the binding information B is the same as the user session identification information of the binding information to be registered, then it is determined that the use state of the binding information B is an invalid state.

If the user session identification information of the binding information A, binding information B and binding information C is all different from the user session identification information of the binding information to be registered, then it is determined that the use states of the binding information A, binding information B and binding information C are valid states respectively.

In some embodiments, the user session identification information includes user permanent identification information and PDU session identification information, whether user permanent identification information of the binding information to be registered is the same as user permanent identification information of each piece of registered binding information is determined; if the user permanent identification information of the binding information to be registered is the same as the user permanent identification information of a piece of the registered binding information, whether PDU session identification information of the binding information to be registered is the same as PDU session identification information of each piece of registered binding information is determined; and if the PDU session identification information of the binding information to be registered is the same as the PDU session identification information of the piece of registered binding information, it is determined that the use state of the piece of registered binding information is an invalid state. Thus, the use state of the registered binding information can be accurately determined by means of the user permanent identification information and the PDU session identification information.

For example, if the registered binding information in the BSF network element includes binding information A, binding information B and binding information C, then the user permanent identification information and the PDU session identification information corresponding to each of the binding information A, binding information B and binding information C are acquired. If the user permanent identification information of the binding information B is the same as the user permanent identification information of the binding information to be registered, whether the PDU session identification information of the binding information to be registered is the same as the PDU session identification information of the binding information B is determined; if the PDU session identification information of the binding information to be registered is the same as the PDU session identification information of the binding information B, then the use state of the binding information B is determined to be an invalid state.

If the user permanent identification information of the binding information A, binding information B and binding information C is all different from the user permanent identification information of the binding information to be registered, and the PDU session identification information of the binding information A, binding information B and binding information C is all different from the PDU session identification information of the binding information to be registered, then the use states of the binding information A, binding information B and binding information C may be determined to be the valid state respectively.

In some embodiments, in the BSF network element, target registered binding information is determined according to the user session identification information; user session identification information corresponding to the target registered binding information and SMF network element identification information corresponding to the target registered binding information are acquired; and a use state of the target registered binding information is determined according to the user session identification information and SMF network element identification information corresponding to the target registered binding information. Thus, the use state of the registered binding information can be accurately determined according to the SMF network element identification information, and the corresponding registered binding information can be deregistered accurately.

The target registered binding information is screened-out registered binding information. In some cases, the user permanent identification of the target registered binding information is the same as the user permanent identification of the binding information to be registered.

In some cases, the target registered binding information can be determined from pieces of registered binding information of the BSF network element according to the user session identification information of the binding information to be registered. Since the user session identification information of the registered binding information and the SMF network element identification information of the same are both stored in the BSF network element, the user session identification information and SMF network element identification information corresponding to the target registered binding information can be acquired by the BSF network element, and according to the acquired user session identification information and SMF network element identification information, the use state of the corresponding target registered binding information can be determined.

For example, if the target registered binding information includes binding information A, binding information B and binding information C, the user permanent identification information corresponding to the binding information A, binding information B and binding information C and the PDU session identification information corresponding to the same are acquired. The PDU session state of the SMF network element is determined according to the user permanent identification information and PDU session identification information corresponding to binding information A, binding information B and binding information C, and thus the use state of the registered binding information is determined.

In some embodiments, the user permanent identification information corresponding to the registered binding information in the BSF network is acquired; whether user permanent identification information of the binding information to be registered is the same as user permanent identification information of each piece of registered binding information is determined; if the user permanent identification information of the binding information to be registered is the same as the user permanent identification information of a piece of registered binding information, the piece of registered binding information is used as the target registered binding information. Thus, the corresponding target registered binding information can be accurately determined by means of the user permanent identification information, and the target registered binding information in an invalid use state can be deregistered.

In some cases, since the user permanent identification information of the registered binding information is stored in the BSF network element during the registration process, the user permanent identification information corresponding to the registered binding information can be acquired from the BSF network element, and whether the user permanent identification information of the binding information to be registered is the same as the user permanent identification information of each piece registered binding information can be determined; if the user permanent identification information of the binding information to be registered is the same as the user permanent identification information of a piece of registered binding information, then the piece of registered binding information is used as target registered binding information; if there is no user permanent identification information of the pieces of registered binding information being the same as the user permanent identification information of the binding information to be registered , the registered binding information cannot be used as target registered binding information.

In some embodiments, an SMF network element corresponding to the target registered binding information is determined according to the SMF network element identification information; and a use state of the target registered binding information is determined according to the user session identification information and the SMF network element. Thus, the use state of the registered binding information can be accurately determined by means of the SMF network element identification information.

In some cases, the SMF network element corresponding to the target registered binding information is determined according to the SMF network element identification information; and the PDU session state of the SMF network element corresponding to the target registered binding information is determined according to the user permanent identification information and PDU session identification information corresponding to the target registered binding information, so that the use state of the registered binding information is determined.

For example, if the target registered binding information includes binding information A and binding information B. For the binding information A, the SMF network element corresponding to the binding information A is determined according to the SMF network element identification information corresponding to the binding information A, and the use state of the binding information A is determined according to both the user session identification information and the SMF network element corresponding to the binding information A; similarly, for the binding information B, the SMF network element corresponding to the binding information B is determined according to the SMF network element identification information corresponding to the binding information B, and the use state of the binding information B is determined according to both the user session identification information and the SMF network element corresponding to the binding information B.

In some embodiments, the PDU session state corresponding to the SMF network element is determined according to the user session identification information of the target registered binding information; if the PDU session state corresponding to the SMF network element is a released state, the use state of the target registered binding information is determined to be an invalid state. Thus, the use state of the registered binding information can be accurately determined according to the PDU session state corresponding to the SMF network element.

The PDU session state corresponding to the SMF network element includes a released state and an unreleased state. If the PDU session state is a released state, the use state of the registered binding information is determined to be an invalid state; if the PDU session state is an unreleased state, the use state of the registered binding information is determined to be a valid state.

In some cases, the PDU session state corresponding to the SMF network element is determined according to the user session identification information corresponding to the target registered binding information; if the PDU session state corresponding to the SMF network element is a released state, the use state of the registered binding information is determined to be an invalid state; and if the PDU session state corresponding to the SMF network element is an unreleased state, the use state of the registered binding information is determined to be a valid state.

In some cases, the use state of the target registered binding information corresponding to the SMF network element may be determined by sending a subscription request (i.e., a Nsmf_EventExposure_Subscribe request) to an event exposure service of the corresponding SMF network element and detecting a response message fed back by the SMF network element.

For example, if the target registered binding information includes binding information A and binding information B. For the binding information A, the PDU session state of the corresponding SMF network element thereof is determined according to the user session identification information of the binding information A; and if the PDU session state corresponding to the SMF network element is a released state, then the use state of the binding information Ais determined to be an invalid state. For the binding information B, the PDU session state of the corresponding SMF network element thereof is determined according to the user session identification information of the binding information B; and if the PDU session state corresponding to the SMF network element is an unreleased state, the use state of the binding information B is determined to be a valid state.

In some embodiments, prior to acquiring the user session identification information and SMF network element identification information corresponding to the target registered binding information, the registration time of each piece of the target registered binding information is acquired; the sequence of the pieces of target registered binding information is determined according to the registration time, so as to acquire the user session identification information corresponding to the target registered binding information sequentially according to the above sequence. Generally, the earlier the registration time is, the more likely the PDU session state corresponding to the SMF network element is a released state. Thus, the use state of the registered binding information can be determined more accurately and more efficiently.

In some cases, the registration time of each piece of target registered binding information in the BSF network element may be acquired; the sequence of the pieces of target registered binding information is determined according to the registration time, so as to acquire the user session identification information corresponding to the pieces target registered binding information sequentially according to the sequence, so as to determine the use state of each piece of target registered binding information. By firstly sorting the pieces of target registered binding information and then determining the use state of the pieces of target registered binding information sequentially, the use state of the target registered binding information can be determined more accurately and more efficiently.

For example, if the target registered binding information includes binding information A, binding information B and binding information C, and the registration time corresponding to the binding information A, binding information B and binding information C is acquired respectively. If the registration time of the binding information A is October 1, 2020, the registration time of the binding information B is November 1, 2020, and the registration time of the binding information C is December 1, 2020, then the binding information A, the binding information B and the binding information C may be sorted, and the sequence may be from binding information A to binding information B to binding information C, and the user session identification information of the binding information A is acquired firstly in order to determine the use state of the binding information A, and then the user session identification information of the binding information B is acquired to determine the use state of the binding information B, and so on.

AtS103: target binding information is determined from among the registered binding information according to the use state, and the target binding information is deregistered.

The target binding information is used to indicate the binding information which is registered in the BSF network element, but is not deregistered due to failure of the PCF network element or an abnormality in a link between the PCF network element and the BSF network element.

In some embodiments, if the use state of the registered binding information is an invalid state, then the registered binding information is determined as target binding information. Thus, the target binding information can be determined according to the use state of the registered binding information, and the target binding information can be deregistered, therefore, invalid binding information can be cleared from a BSF network element timely, the risk overload of the BSF is reduced, residual binding information is avoided from occupying memory resources of the BSF network element, and the memory of the BSF network element is prevented from being overloaded and unable to process subsequent services normally.

In some cases, if the use state of the registered binding information is a valid state, then it is determined that the registered binding information is not the target binding information, and it is not necessary to deregister the registered binding information.

Referring to FIG. 2, FIG. 2 is an application scenario diagram of a method for processing binding information provided in embodiments of the present application. The method for processing binding information can be applied in a scenario involving a network device and a terminal device, wherein the network device at least includes an SMF network element, a PCF network element, and a BSF network element. Thus, invalid binding information can be cleared from a BSF network element timely, the risk overload of the BSF is reduced, residual binding information is avoided from occupying memory resources of the BSF network element, and the memory of the BSF network element is prevented from being overloaded and unable to process subsequent services normally.

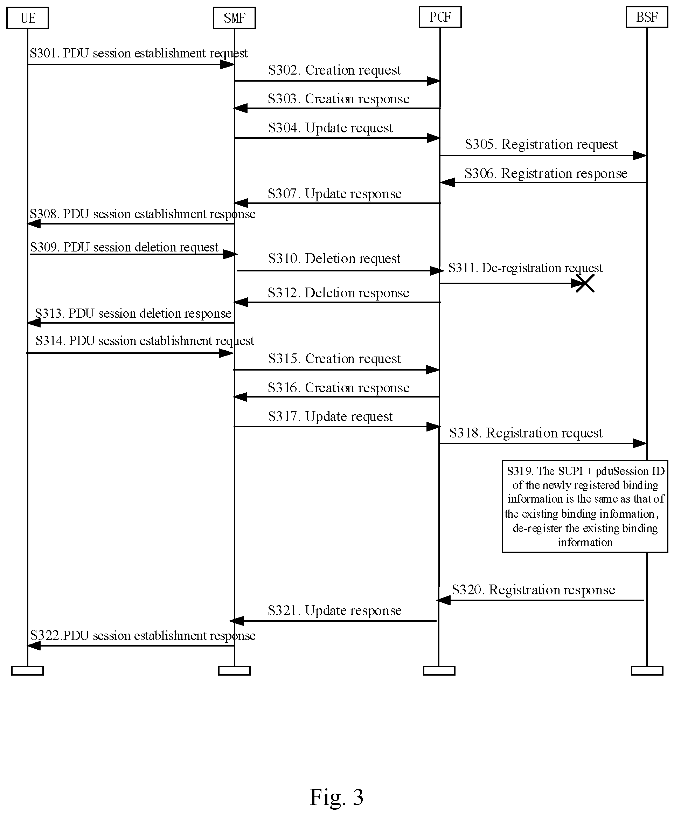

In some embodiments, as shown in FIG. 3, a method for processing binding information, including steps S301 to S322, proposed in an embodiment of the present application is introduced in the overall PDU session establishing process.

At S301: UE initiates a PDU session establishment request to an SMF network element, the PDU session establishment request carries SUPI and pduSessionId, and it is assumed that pduSessionId = 1.

At S302: The SMF network element sends a creation request (i.e., an NPCF_SMPolicyControl_Create request) to a session policy control service of the PCF network element, so as to request the PCF network element to create an SM policy association, and the request carries parameters such as the SUPI and pduSessionId.

At S303: After receiving the creation request, the session policy control service of the PCF network element creates the SM policy association, and a creation response (i.e., an NPCF_SMPolicyControl_Create response) sent to the SMF network element carries the unique identification smPolicyId, generated by the PCF network element, of the SM policy association, as well as a session policy control parameter, etc.

At S304: According to the session policy control parameters issued by the PCF network element, the SMF network element selects a UPF and allocates an IP address (UE IP) to the UE. The SMF network element sends an update request (i.e., an NPCF_SMPolicyControl_Update request) to the session policy control service of the PCF network element, and the request carries parameters such as the smPolicyId and UE IP.

At S305: After receiving the update request sent by the SMF network element, the session policy control service of the PCF network element finds that the request carries the UE IP, and the PCF network element determines it necessary to register the binding information associated with the policy (i.e., the binding relationship between the UE IP and a PCF network element instance) in the BSF network element, and thus sends a registration request i.e., a NBSF_network_element_Management_Register request) to a management service of the BSF network element, the request carries binding information, and the binding information includes parameters such as SUPI, UE IP, FQDN of the PCF network element, IP address port of the PCF network element, pduSessionId.

At S306: After receiving the registration request, the management service of the BSF network element registers the binding information carried in the registration request in an internal database, and then returns a response to the PCF network element, the response carries the unique identification BindingId generated by the BSF network element of the binding information, and it is assumed that BindingId = 1.

At S307: After receiving the registration response from the BSF network element, the session policy control service of the PCF network element confirms that the binding information is successfully registered, and returns a response (i.e., a NPCF_SMPolicyControl_Update response) to the SMF network element.

At S308: The SMF network element returns a PDU session establishment response which carries parameters such as UE IP to the UE.

At S309: The UE requests to delete an existing PDU session due to reasons such as restart, and the session deletion request is finally transmitted to the SMF network element.

At S310: The SMF network element sends a deletion request (i.e., a NPCF_SMPolicyControl_Delete request) to the session policy control service of the PCF network element, and the request carries smPolicyId, which instructs the PCF network element to delete the SM policy association.

At S311: The session policy control service of the PCF network element finds the SM policy association according to smPolicyId, and sends a de-registration request (i.e., an NBSF_Management_Deregister request) to the management service of the BSF network element, the request carries BindingId=1, which instructs the BSF network element to delete the binding information. However, due to reasons such as abnormality in a link between the PCF network element and the BSF network element, the BSF network element does not receive the request.

At S312: After overtime of response of BSF network element, the session policy control service of the PCF network element deletes the SM policy association related to smPolicyId, and returns a deletion response (i.e., NPCF_SMPolicyControl_Delete response) to the SMF network element.

At S313: The SMF network element releases the PDU session and returns a response to the UE.

At S314: After restarting, the UE re-initiates a PDU session establishment request to the SMF network element, which carries SUPI and pduSessionId, and it is assumed here that the value of pduSessionId is still 1.

At S315: The SMF network element sends a creation request (i.e., NPCF_SMPolicyControl_Create request) to the session policy control service of the PCF network element, so as to request the PCF network element to create an SM policy association, and the request carries parameters such as SUPI and pduSessionId.

At S316: After receiving the creation request, the session policy control service of the PCF network element creates an SM policy association, and the creation response (i.e., NPCF_SMPolicyControl_Create response) sent to the SMF network element carries the unique identification smPolicyId generated by the PCF network element of the SM policy association, as well as the session policy control association related parameters, etc.

At S317: According to the session policy control parameters issued by the PCF network element, the SMF network element selects a UPF, and allocates an IP address (UE IP) to the UE. The SMF network element sends an update request (i.e., NPCF_SMPolicyControl_Update request) to the session policy control service of the PCF network element, and the request carries parameters such as smPolicyId and UE IP.

At S318: After receiving the update request sent by the SMF network element, the session policy control service of the PCF network element finds that the request carries the UE IP, and the PCF network element determines it necessary to register the binding information associated with the policy (i.e., the binding relationship between the UE IP and the PCF network element instance) in the BSF network element, and thus sends a registration request (i.e., NBSF_Management_Register request) to the management service of the BSF network element, the request carries binding information, and the binding information includes parameters such as SUPI, UE IP, FQDN of the PCF network element, IP address port of the PCF network element, etc..

At S319: The management service of the BSF network element receives the registration request and finds that the SUPI+pduSession ID of the newly registered binding information is the same as that of the existing binding information of which Binding Id=1, and the BSF network element considers the use state of the existing binding information to be invalid and de-registers the existing binding information.

At S320: The management service of the BSF network element registers the binding information carried in the registration request in the previous step in the internal database, and then returns a response to the PCF network element, where the response carries the unique identification BindingId of the binding information generated by the BSF network element, and it is assumed that BindingId = 2.

At S321: After receiving the registration response from the BSF network element, the session policy control service of the PCF network element confirms that the binding information is successfully registered, and returns a response (i.e., NPCF_SMPolicyControl_Update response) to the SMF network element.

At S322: The SMF network element returns to the UE with a PDU session establishment response, which carries parameters such as UE IP.

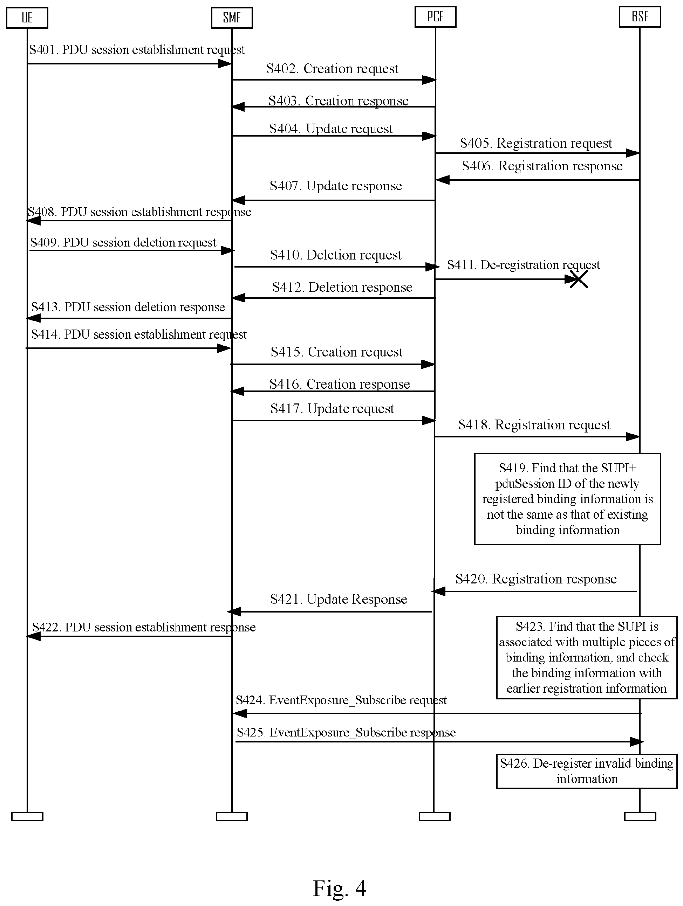

In some embodiments, as shown in FIG. 4, the method for processing binding information proposed, including steps S401 to S426, in another embodiment of the present application is introduced in the overall PDU session establishing process.

At S401: UE initiates a PDU session establishment request to an SMF network element, the request carries SUPI and pduSessionId, and it is assumed that pduSessionId = 1.

At S402: The SMF network element sends a creation request (i.e., an NPCF_SMPolicyControl_Create request) to a session policy control service of the PCF network element, so as to request the PCF network element to create an SM policy association, and the request carries parameters such as SUPI and pduSessionId.

At S403: After receiving the creation request, the session policy control service of the PCF network element creates an SM policy association, and a creation response (i.e., an NPCF_SMPolicyControl_Create response) sent to the SMF network element carries the unique identification smPolicyId generated by the PCF network element of the SM policy association, as well as the session policy control parameter, etc.

At S404: According to the session policy control parameters issued by the PCF network element, the SMF network element selects a UPF, and allocates an IP address (UE IP) to the UE. The SMF network element sends an update request (i.e., NPCF_SMPolicyControl_Update request) to the session policy control service of the PCF network element, and the request carries parameters such as smPolicyId and UE IP.

At S405: After receiving the update request sent by the SMF network element, the session policy control service of the PCF network element finds that the request carries the UE IP, and the PCF network element determines it necessary to register the binding information associated with the policy (i.e., the binding relationship between the UE IP and the PCF network element instance) in the BSF network element, and thus sends a registration request (i.e., NBSF_Management_Register request) to the management service of the BSF network element, the request carries binding information, and the binding information includes parameters such as SUPI, UE IP, FQDN of the PCF network element, IP address port of the PCF network element, pduSessionId, SmfId.

At S406: After receiving the registration request, the management service of the BSF network element registers the binding information carried in the registration request in the internal database, and then returns a response to the PCF network element, the response carries the unique identification BindingId of the binding information generated by the BSF network element, and it is assumed here that BindingId = 1.

At S407: After receiving the registration response from the BSF network element, the session policy control service of the PCF network element confirms that the binding information is successfully registered, and returns a response (i.e., NPCF_SMPolicyControl_Update response) to the SMF network element.

At S408: The SMF network element returns a PDU session establishment response, which carries parameters such as UE IP, to the UE.

At S409: The UE requests to delete an existing PDU session due to reasons such as restart, and the session deletion request is finally transmitted to the SMF network element;

At S410: The SMF network element sends a deletion request (i.e., NPCF_SMPolicyControl_Delete request) to the session policy control service of the PCF network element, and the request carries smPolicyId, which instructs the PCF network element to delete the SM policy association.

At S411: The session policy control service of the PCF network element finds the SM policy association according to smPolicyId, and sends a de-registration request (i.e., NBSF_Management_Deregister request) to the management service of the BSF network element, the request carries BindingId=1, which instructs the BSF network element to delete the binding information. However, due to reasons such as abnormality in a link between the PCF network element and the BSF network element, the BSF network element does not receive the request.

At S412: After overtime of response of BSF network element, the session policy control service of the PCF network element deletes the SM policy association related to smPolicyId, and returns a deletion response (i.e., NPCF_SMPolicyControl_Delete response) to the SMF network element.

At S413: The SMF network element releases the PDU session and returns a response to the UE.

At S414: After restarting, the UE re-initiates a PDU session establishment request to the SMF network element, which carries SUPI and pduSessionId, and it is assumed here that the value of pduSessionId is 2.

At S415: The SMF network element sends a creation request (i.e., NPCF_SMPolicyControl_Create request) to the session policy control service of the PCF network element, so as to request the PCF network element to create an SM policy association, and the request carries parameters such as SUPI and pduSessionId.

At S416: After receiving the creation request, the session policy control service of the PCF network element creates an SM policy association, and the creation response (i.e., NPCF_SMPolicyControl_Create response) sent to the SMF network element carries the unique identification smPolicyId generated by the PCF network element of the SM policy association, as well as the session policy control parameters, etc.

At S417: According to the session policy control parameters issued by the PCF network element, the SMF network element selects the UPF, and allocates an IP address (abbreviated as UE IP) to the UE. The SMF network element sends an update request (i.e., NPCF_SMPolicyControl_Update request) to the session policy control service of the PCF network element, the request carries parameters such as smPolicyId and UE IP.

At S418: After receiving the update request sent by the SMF network element, the session policy control service of the PCF network element finds that the request carries the UE IP, and the PCF network element determines it necessary to register the binding information associated with the policy (i.e., the binding relationship between the UE IP and the PCF network element instance) in the BSF network element, and thus sends a registration request (i.e., NBSF_Management_Register request) to the management service of the BSF network element, the request carries binding information, and the binding information includes parameters such as SUPI, UE IP, FQDN of the PCF network element, IP address port of the PCF network element.

At S419: The management service of the BSF network element receives the registration request and finds that the SUPI+pduSession ID of the newly registered binding information is not the same as that of existing binding information, and the existing binding information cannot be cleared on such basis.

At S420: The management service of the BSF network element registers the binding information carried in the registration request in the previous step in the internal database, and then returns a response to the PCF network element, the response carries the unique identification BindingId generated by the BSF network element of the binding information, and it is assumed here that BindingId = 2.

At S421: After receiving the registration response from the BSF network element, the session policy control service of the PCF network element confirms that the binding information is successfully registered, and returns a response (i.e., NPCF_SMPolicyControl_Update response) to the SMF network element.

At S422: The SMF network element returns to the UE with a PDU session establishment response, which carries parameters such as UE IP.

At S423: The BSF network element finds that the SUPI is associated with multiple pieces of binding information, and checks the binding information with earlier registration information (Binding Id=1) thereof.

At S424: The BSF network element sends a subscription request (i.e., NSMF_EventExposure_Subscribe request) to an event exposure service of the SMF network element indicated by the SMF Id (i.e., SMF network element identification information) corresponding to the binding information (BindingId = 1), the request carries the SUPI+pduSessionId of the binding information, a PDU session release event (SMF Event=PDU_SESS_REL) is subscribed, and ImmeRep = true is carried to indicate that release of the PDU session by the SMF network element should be reported immediately in the response.

At S425: After receiving the subscription request, the event exposure service of the SMF network element does not find a corresponding PDU session according to the SUPI+pduSessionId in the request, it is determined that the PDU session has been released, and the subscription response (i.e., NSMF_EventExposure_Subscribe response) carries the SMF network element Event=PDU_SESS_REL, which indicates the BSF network element that the PDU session has been released.

At S426: After receiving the subscription response, the BSF network element finds that the SMF network element Event = PDU_SESS_REL is carried therein, and knows that the PDU session has been released, the BSF network element releases the binding information (BindingId = 1) locally, so as to deregister the binding information.

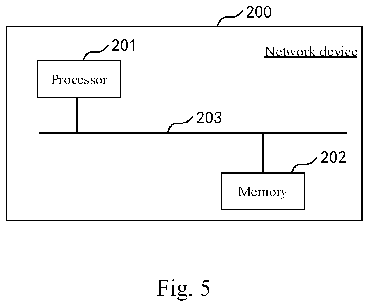

Referring to FIG. 5, FIG. 5 is a schematic structural block diagram of a network device provided by embodiments of the present application.

As shown in FIG. 5, the network device 200 may include a processor 201 and a memory 202, the processor 201 and the memory 202 are connected via a bus 203, such as an I2C (Inter-integrated Circuit) bus.

In an exemplary embodiment, the processor 201 may be used to provide computing and control capabilities to support the operation of the entire terminal device. The processor 201 may be a central processing unit (CPU), the processor 401 may also be other general-purpose processor, a digital signal processor (DSP), an application-specific integrated circuit (ASIC), a field-programmable gate array (FPGA) or other programmable logic devices, discrete gates or transistor logic devices, discrete hardware components, etc. A general-purpose processor may be a microprocessor or the processor may also be any conventional processor.

In some cases, the memory 202 may be a Flash chip, a read-only memory (ROM), a disk, an optical disk, a USB disk or a mobile hard disk, etc.

Those skilled in the art can understand that, the structure as shown in FIG. 3 is merely a block diagram of a part of structure related to the embodiments of the present application, and does not constitute a limitation on the terminal device to which the embodiments of the present application are applied, and a specific server may include more or less components than those illustrated, a combination of certain components, or different arrangement of components.

The processor 201 is used to execute a computer program stored in the memory, and implement any one of the methods for processing binding information provided in the embodiments of the present application when executing the computer program.

In one embodiment, the processor 201 is used to execute a computer program stored in a memory, and implement the following steps when executing the computer program: acquiring, in a case where a binding support function called BSF network element receives a binding information registration request, user session identification information corresponding to binding information to be registered; determining, according to the user session identification information, a use state of each piece of registered binding information in the BSF network element; and determining, according to the use state, target binding information from among the registered binding information, and deregistering the target binding information.

In one embodiment, the processor 201 determining, according to the user session identification information, the use state of each piece of registered binding information in the BSF network element is used to implement the following steps: acquiring user session identification information corresponding to each piece of registered binding information in the BSF network; determining whether the user session identification information of the binding information to be registered is the same as the user session identification information corresponding to each piece of the registered binding information; and determining, in a case where the user session identification information of the binding information to be registered is the same as the user session identification information corresponding to a piece of the registered binding information, the use state of the piece of registered binding information to be an invalid state.

In one embodiment, the user session identification information includes user permanent identification information and PDU session identification information, and the processor 201 determining whether the user session identification information of the binding information to be registered is the same as the user session identification information corresponding to each piece of the registered binding information; and determining, in the case where the user session identification information of the binding information to be registered is the same as the user session identification information corresponding to the piece of the registered binding information, the use state of the piece of registered binding information to be the invalid state comprises, is used to implement the following steps: determining whether user permanent identification information of the binding information to be registered is the same as user permanent identification information of each piece of the registered binding information; determining, in a case where the user permanent identification information of the binding information to be registered is the same as the user permanent identification information of a piece of the registered binding information, whether PDU session identification information of the binding information to be registered is the same as PDU session identification information of the piece of registered binding information; and determining, in a case where the PDU session identification information of the binding information to be registered is the same as the PDU session identification information of the piece of registered binding information, the use state of the piece of registered binding information to be the invalid state.

In one embodiment, the processor 201 determining the use state of each piece registered binding information in the BSF network element according to the SMF network element identification information, is used to implement the following steps: acquiring the user session identification information corresponding to each piece of registered binding information in the BSF network element, and determining an SMF network element corresponding to the binding information to be registered according to the SMF network element identification information; determining a use state of the registered binding information according to the user session identification information corresponding to the registered binding information and the SMF network element identification information corresponding to the binding information to be registered.

In one embodiment, when the processor 201 determining the use state of the registered binding information according to the user session identification information corresponding to the registered binding information and the SMF network element corresponding to the binding information to be registered, is used to implement the following steps: determining the PDU session state corresponding to the SMF network element according to the user session identification information corresponding to the target registered binding information; and if the PDU session state corresponding to the SMF network element is a released state, determining the use state of the registered binding information to be an invalid state.

In one embodiment, prior to acquiring the user session identification information corresponding to the registered binding information in the BSF network element, the processor 201 is used to implement the following steps: acquiring the registration time of each piece of the registered binding information; and determining the sequence of pieces of registered binding information according to the registration time, so as to acquire the user session identification information corresponding to the registered binding information sequentially according to the sequence.

In one embodiment, the processor 201 determining the target binding information from the registered binding information according to the use state, is used to implement the following step: if the use state of the registered binding information is an invalid state, determining then the registered binding information as target binding information.

In one embodiment, prior to acquiring the user session identification information and the SMF network element identification information corresponding to the binding information to be registered when the BSF network element receives a binding information registration request, the processor 201 is used to implement the following steps: acquiring a PDU session establishment request sent by a terminal device, where the PDU session establishment request includes the user session identification information; creating a session management policy according to the user session identification information, where the session management policy includes the SMF network element identification information and the session policy control parameters; and generating the binding information to be registered according to the SMF network element identification information and the session policy control parameters.

In one embodiment, when the BSF network element receives a binding information registration request, and the user session identification information and the SMF network element identification information corresponding to the binding information to be registered is acquired, the processor 201 is used to implement the following steps: when the BSF network element receives the binding information registration request, registering the binding information to be registered in the BSF network element, and generating binding identification information, where the binding identification information includes the user session identification information and the SMF network element identification information.

It should be noted that those skilled in the art can clearly understand that for the ease and clarity of description, the specific working process of the terminal device described above can refer to the corresponding process in the aforementioned terminal capability reporting method embodiment, which will not be repeated here.

The embodiments of the present application further provide a storage medium for computer-readable storage, wherein the storage medium stores one or more programs thereon, and the one or more programs can be executed by one or more processors, so as to implement the steps of the method for processing binding information according to any one of aspects of the embodiment of description of the present application.

The storage medium may be an internal storage unit of the terminal device described in the foregoing embodiments, such as a hard disk or memory of the terminal device. The storage medium may also be an external storage device of the terminal device, such as a plug-in hard disk, a smart memory card (SMC), a secure digital (SD) card, a flash card, etc., equipped on the terminal device.

It is to be understood by those skilled in the art that all or some of the steps, systems, and functional modules/units in the systems and devices in the methods disclosed above can be implemented as software, firmware, hardware, and suitable combination thereof. In hardware embodiments, the division among functional modules/units mentioned in the above description does not necessarily corresponds to the division among physical components; for example, a physical component can have a plurality of functions, or a function or step can be performed by several physical components in cooperation. Some or all physical components can be implemented as a software executed by a processor such as a central processing unit, a digital signal processor, or a microprocessor, or as a hardware, or as an integrated circuit such as an application-specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically comprises computer readable instructions, data structures, program modules, or other data in a modulated data signal such as a carrier wave or other transport mechanism, and can include any information delivery media.

It should be understood that the term "and/or" used in the description of the present application and the appended claims refers to any and all possible combination of one or more of the associated listed items, and include these combinations. It should be noted that, as used herein, the terms "include", "comprise" or any other variations thereof are intended to cover a non-exclusive inclusion, such that a process, method, article, or system that comprises a series of elements not only comprises those elements, but also comprises other elements that are not explicitly listed, or further comprises elements that are inherent to the process, method, article, or system. Without further limitations, an element limited by "comprising a..." does not exclude the presence of other identical elements in the process, method, article, or system that comprises the element.

The numbers of embodiments in this application are for description only and do not represent the advantages or disadvantages of the embodiments. The above are only specific embodiments of the present application, but the protection scope of the present application is not limited thereto, any technician familiar with the technical field can easily think of various equivalent modifications or replacements within the technical scope disclosed in the present application, and these modifications or replacements should be included in the protection scope of the present application. Therefore, the protection scope of the present application shall be based on the protection scope of the claims.

## Claims

1. A method for processing binding information, comprising:
acquiring, in a case where a binding support function called BSF network element receives a binding information registration request, user session identification information corresponding to binding information to be registered;
determining, according to the user session identification information, a use state of each piece of registered binding information in the BSF network element; and
determining, according to the use state, target binding information from among the registered binding information, and deregistering the target binding information.

2. The method according to claim 1, wherein determining, according to the user session identification information, the use state of each piece of registered binding information in the BSF network element comprises:
acquiring user session identification information corresponding to each piece of registered binding information in the BSF network;
determining whether the user session identification information of the binding information to be registered is the same as the user session identification information corresponding to each piece of the registered binding information; and
determining, in a case where the user session identification information of the binding information to be registered is the same as the user session identification information corresponding to a piece of the registered binding information, the use state of the piece of registered binding information to be an invalid state.

3. The method according to claim 2, wherein the user session identification information comprises user permanent identification information and packet data unit called PDU session identification information,
determining whether the user session identification information of the binding information to be registered is the same as the user session identification information corresponding to each piece of the registered binding information; and determining, in the case where the user session identification information of the binding information to be registered is the same as the user session identification information corresponding to the piece of the registered binding information, the use state of the piece of registered binding information to be the invalid state comprises:
determining whether user permanent identification information of the binding information to be registered is the same as user permanent identification information of each piece of the registered binding information;
determining, in a case where the user permanent identification information of the binding information to be registered is the same as the user permanent identification information of a piece of the registered binding information, whether PDU session identification information of the binding information to be registered is the same as PDU session identification information of the piece of registered binding information; and
determining, in a case where the PDU session identification information of the binding information to be registered is the same as the PDU session identification information of the piece of registered binding information, the use state of the piece of registered binding information to be the invalid state.

4. The method according to claim 1, wherein determining, according to the user session identification information, the use state of each piece of the registered binding information in the BSF network element comprises:
determining, according to the user session identification information, target registered binding information in the BSF network element;
acquiring user session identification information corresponding to the target registered binding information and session management function called SMF network element identification information corresponding to the target registered binding information; and
determining, according to the user session identification information corresponding to the target registered binding information and the SMF network element identification information corresponding to the target registered binding information, the use state of the target registered binding information.

5. The method according to claim 4, wherein the user session identification information comprises user permanent identification information, and determining, according to the user session identification information, the target registered binding information in the BSF network element comprises:
acquiring user permanent identification information corresponding to each piece of registered binding information in the BSF network;
determining whether user permanent identification information of the binding information to be registered is the same as user permanent identification information of each piece of the registered binding information; and
using, in a case where the user permanent identification information of the binding information to be registered is the same as the user permanent identification information of a piece of the registered binding information, the piece of registered binding information as the target registered binding information.

6. The method according to claim 4, wherein determining, according to the user session identification information corresponding to the target registered binding information and the SMF network element identification information corresponding to the target registered binding information, the use state of the target registered binding information comprises:
determining, according to the SMF network element identification information, an SMF network element corresponding to the target registered binding information; and
determining, according to the user session identification information and the SMF network element, the use state of the target registered binding information.

7. The method according to claim 6, wherein determining, according to the user session identification information and the SMF network element, the use state of the target registered binding information comprises:
determining, according to user session identification information of the target registered binding information, a PDU session state corresponding to the SMF network element; and
determining, in a case where the PDU session state corresponding to the SMF network element is a released state, the use state of the target registered binding information to be an invalid state.

8. The method according to claim 1, wherein determining, according to the use state, the target binding information from among the registered binding information comprises:
determining, in a case where the use state of the registered binding information is an invalid state, the registered binding information to be the target binding information.

9. A network device, comprising:
a processor, a memory, a computer program stored in the memory and executable by the processor, and a data bus for implementing connection and communication between the processor and the memory, wherein the computer program, when executed by the processor, implements the steps of the method for processing binding information according to any one of claims 1 to 8.

10. A computer-readable storage medium, wherein the storage medium stores one or more programs thereon, and the one or more programs can be executed by one or more processors, so as to implement the steps of the method for processing binding information according to any one of claims 1 to 8.
